# EUROPEAN PATENT APPLICATION

(11) **EP 4 640 473 A1**
(43) Date of publication of application: **29.10.2025**
(21) Application number: 24171664.6
(22) Date of filing: 22.04.2024
(51) Int. Cl.: B60L 5/00, B60L 7/06, B60L 7/08, B60L 50/51, B60L 9/30, B60L 50/53, B61C 3/02, B61C 9/38, B61C 17/06, H02P 3/22

(54) **TRACTION SYSTEM FOR A VEHICLE WITH ELECTRICAL TRACTION**

(71) Applicant: ALSTOM Holdings, 93400 Saint-Ouen-sur-Seine (FR)
(72) Inventor: Orrhede, Mats, 252 69 RÅÅ (SE); Gustafsson, Jonas, 725 91 Västerås (SE); Holmberg, Christer, 725 96 Västerås (SE)
(74) Representative: Bjerkén Hynell KB

(57) **Abstract**

A traction system (2) for a vehicle, e.g. a train or a locomotive, comprising at least one AC traction motor (4) to propel said vehicle; a DC link (6) configured to supply voltage having a predetermined first voltage level to said at least one AC traction motor (4); a first power supply (8) configured to supply said DC link (6), e.g. from overhead contact lines, with voltage at said predetermined first voltage level. In addition, the traction system (2) comprises a second power supply (10) comprising at least one battery providing a predetermined second voltage level, being lower than the predetermined first voltage level; a chopper circuitry (12) connected to the DC link (6); a brake resistor unit (14) comprising at least one brake resistor, and a control unit (16). The traction system (2) also comprises a battery-operation propulsion (BOP) unit (18) configured to connect the second power supply (10) to the DC link (6), The control unit (16) is configured to control the BOP unit (18) to either:
a) function as a step-up chopper to adapt the predetermined second voltage level to the predetermined first voltage level such that the DC link (6) is supplied by the second power supply (10), or
b) function as a brake chopper for dynamic/rheostatic braking.

## Description

### Technical field

The present invention relates to a traction system for a rail-bound vehicle with electrical traction.

### Background

For trains with electrical traction where the electrical energy is received e.g. via overhead lines or via third rail, there may be situations where no externally generated electrical energy from e.g. the overhead lines or third rail is available.

The technical problem to be solved by the traction system described herein is considered to be how to provide means to move the train, that is provided with an auxiliary power supply which normally may provide electrical energy at a lower voltage level than is required for the AC traction motors of the train, without using any external power source, and essentially based on reuse of existing components, i.e. by only having to include a minimum of additional components.

In the following, some documents that disclose related technology will be identified and briefly discussed.

EP3876413 A1 discloses multiuse of phase legs in a power supply system for a traction unit having a transformer for providing a transformer AC voltage from an electrical grid and a battery for providing a battery DC voltage. The document describes a traction system which is supplied either by overhead lines or by a battery. A brake resistor unit with a brake chopper is disclosed.

US2016288666 A1 describes a system provided for controlling emergency driving of a fuel cell vehicle. The system includes a cut-off relay that connects or cuts off a current flow between a chopper and a supercapacitor. Thus, a traction system is provided, with a fuel cell and a supercapacitor as second power source. A brake resistor unit with a brake chopper is disclosed.

WO2021161191 A1 discloses a vehicle with an electrical traction including an energy management system comprising a generator set, configured to generate a first supply voltage and mechanically disconnected from the wheels in every operating condition, a battery storage assembly configured to generate a second supply voltage, a control unit that implements operative conditions of the vehicle, including powering the electrical traction chain with the first supply voltage, powering the electrical traction chain with the second supply voltage, recharging the storage assembly with a network voltage external to the vehicle and coming from a catenary, recharging the storage assembly with the first supply voltage, and recharging the storage assembly with a recovered voltage generated by the traction chain operating as an electrical generator.

The present invention is focussing on the reconfiguration of existing circuits in a traction system to allow for boosted voltage from an auxiliary battery to be used to propel the train, where the auxiliary battery voltage normally is too low to magnetize and provide sufficient tractive effort to the traction motors, specially e.g. in a 750 or a 1500 V DC link system.

The technical problem to be solved by the invention is considered to be how to provide means to move the train, that is provided with an auxiliary power supply, without using any external power source, and essentially based on reuse of existing components, i.e. by only having to include a minimum of additional components.

Thus, the object of the invention is to realize a traction system with either overhead line power supply (or via third rail) or with auxiliary power supply and dynamic braking with minimum of components.

### Summary

The above-mentioned objects are achieved by the present invention according to the independent claim.

Preferred embodiments are set forth in the dependent claims.

According to the present invention the above object is achieved by reconfiguring a chopper circuitry to not only have a brake chopper functionality but also to have a step-up chopper functionality. Thereby, the voltage available from the auxiliary battery (normally 110V, but also e.g. 24V, 36V, 54V, 72V) can be brought up to the voltage required on the DC link, i.e. to a voltage level high enough for the train to move. The limitations in terms of power and voltage is fitting shunting and emergency operation, e.g. for moving the train shorter distances, being distances up to some kilometres, depending e.g. on gradient of the railway track, without using overhead line power supply.

When more power is needed (or different functions) a traction battery solution might be applied, which adds cost, weight and complexity to the system.

By implementing the present invention, a dual use of a chopper circuitry connected to the brake resistor unit is achieved. Thus, the chopper connected to the brake resistor unit is either used as a step-up chopper for the auxiliary battery to adapt the voltage level of the auxiliary battery to the voltage level of the DC link, or as a brake chopper for the braking function.

This is advantageous as the number of components is reduced, in comparison to presently applied solutions where separate chopper circuitries are used.

Thus, the present disclosure relates to a traction system provided with means to achieve a simple and cost-effective battery powered traction for shunting and emergency operations, using an auxiliary battery having a voltage output level that is too low to magnetize and provide tractive effort to traction motors over distances longer than 2000 meters including gradients.

The battery operation propulsion (BOP) unit defined herein will be applied as an add-on/option feature to a standard architecture of a traction system.

The primary vehicle applications are rail-bound vehicles, e.g. metros and commuter trains. However, the traction system may be generally applied to all electrical vehicles.

The BOP unit includes an inductor unit configured to smooth out the voltage ripple from the step-up chopper used to change the predetermined second voltage (typically 110V) to a voltage that can be used to power the traction motor (typically 300V) from the DC link.

A brake resistor unit is provided, comprising at least one brake resistor, whereby the brake resistor unit is connected to the chopper when the chopper circuitry is controlled to function as a brake chopper for dynamic braking by the control unit.

By implementing the traction system according to the present invention, it is enabled to power e.g. a 1500V based train traction system from a 110V battery. Previous solutions had significant limitations in terms of operating conditions (i.e. with regard to speed and load).

### Brief description of the drawings

Figure 1 is a block diagram schematically illustrating the traction system according to the present invention.
Figure 2 is a block diagram schematically illustrating the battery operation propulsion unit of the traction system according to the present invention.
Figure 3 is a schematic illustration of the traction system according to embodiments of the present invention.
Figure 4 is a schematic illustration of the traction system according to embodiments of the present invention having the chopper circuitry working as a brake chopper.
Figure 5 is a schematic illustration of the traction system according to embodiments of the present invention having the chopper circuitry working as a step-up chopper.

### Detailed description

The traction system will now be described in detail with references to the appended figures. Throughout the figures the same, or similar, items have the same reference signs. Moreover, the items and the figures are not necessarily to scale, emphasis instead being placed upon illustrating the principles of the invention.

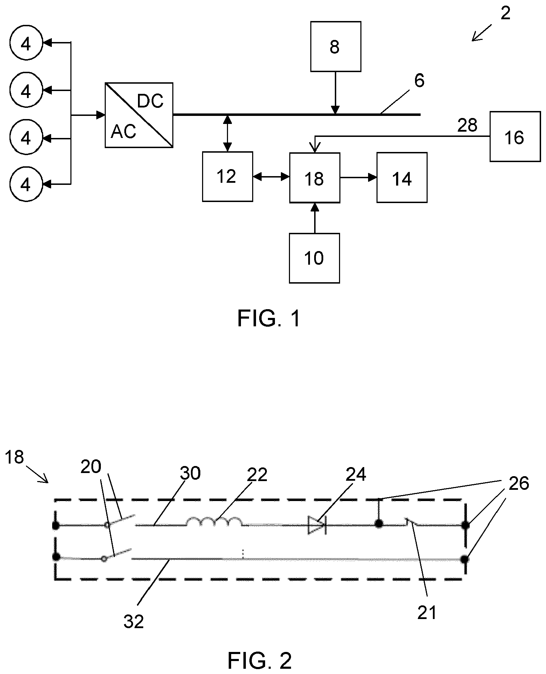

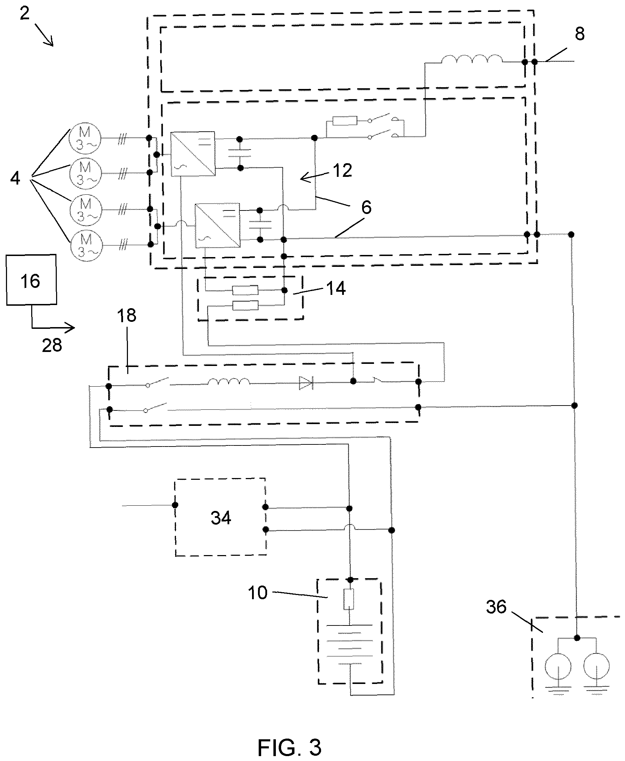

Figure 1 schematically shows, in a block diagram, a traction system 2 for a vehicle with electrical traction (in particular a train or a locomotive). Figure 3 is a schematic illustration of the traction system as shown in figure 1, and it is now referred to both figures. The vehicle with electrical traction comprises at least one AC traction motor 4 to propel the vehicle. The electrical traction includes at least one DC/AC inverter, in particular a three-phase inverter, for converting a DC electric power into a three-phase AC electric power for the at least one AC traction motor 4, powered by means of the AC electric power supplied by the inverter; and a brake resistor unit 14 whose power level is regulated by a DC/DC converter (not shown), (also known as "braking chopper"), designed for dissipating braking energy in the form of heat in the event that the energy cannot be fed into a DC link 6 and/or stored. The at least one AC traction motor 4 provides propulsion to wheels of the vehicle and is therefore designed to generate a driving torque of the vehicle itself.

A main power supply line 6 (hereinafter referred to as "DC link") is provided and configured to transfer a DC electric power supply voltage having a predetermined first voltage level to the vehicle, in particular to power the at least one AC traction motor of the vehicle and any loads or auxiliary services (not shown).

A first power supply 8 is provided configured to supply the DC link 6 e.g. from overhead contact lines, or from a third rail supply, i.e. from an external power supply line at high voltage, to withdraw DC electric energy from such line and make it available to the vehicle, even when the latter is moving, by feeding the DC electric energy towards the DC link.

The traction system 2 further comprises a plurality of switches (not shown in figure 1), in particular bi-directional switches, implemented for example in the form of contactors, contactors, TRIACs, non-manually operated electro-mechanical devices designed for withstanding currents in conditions of high power, or solid-state devices. Alternatively, the switches can be made with semiconductor technology such as, for example, MOSFET or IGBT. In general, the term "switches" refers to electrical or electronic or electromechanical elements capable of interrupting or establishing an electric current path through the same.

In detail, one switch is electrically coupled between the output of the AC/DC electronic converter and the DC link 6, operable to connect/disconnect the electronic converter AC/DC to/from the DC link. Another switch is provided and is electrically coupled between the external power supply line at high voltage and the DC link 6, operable to connect/disconnect the external power line to/from the DC link.

A further switch is electrically coupled between the AC traction motor(s) and the DC link 6, operable to connect/disconnect the traction motor(s) to/from the DC link 6.

The traction system 2, further comprises a second power supply 10 comprising at least one battery providing a predetermined second voltage level, being lower than the predetermined first voltage level. Herein, the second power supply 10 is also referred to as an auxiliary power supply. The second power supply 10 preferably includes a rechargeable battery pack, including one or more battery modules or cells (in any available technology, e.g., lithium, lead, NiCd, NiMH, ZEBRA or others still), connected in series and/or parallel to one another, configured to store energy and provide power useful for various internal service systems of the train, and also for traction of the vehicle, for given distances (for example, a few hundred meters or a few kilometres long).

Furthermore, the traction system 2 comprises a chopper circuitry connected to the DC link 6; a brake resistor unit 14 comprising at least one brake resistor, and a control unit. In figure 3 is also shown a battery charger module 34 provided with necessary circuitry for charging the second power supply 10. In addition, also a current return and earth brushes arrangement 36 is shown.

The traction system 2 further comprises a battery-operation propulsion (BOP) unit 18 configured to connect the second power supply 10 to the DC link 6.

With references to figure 2, the BOP unit 18 comprises battery separation switches 20 structured to connect the chopper circuitry 12 either to the brake resistor unit 14, or to the second power supply 10, an inductor unit 22, and a brake chopper switch 21. The BOP unit 18 further comprises at least one power flow preventing component 24, preferably at least one diode unit, configured to prevent power flow from said first power supply 8 directly to said second power supply 10, and at least one chopper circuitry connection member 26.

The control unit 16 is configured to control the BOP unit 18 by determining a control signal 28 provided with control instructions and by applying the control signal 28 to the BOP unit in order to control said chopper circuitry 12 to either:
a) function as a step-up chopper to adapt the predetermined second voltage level to the predetermined first voltage level such that the DC link 6 is supplied by the second power supply 10, or
b) function as a brake chopper for dynamic/rheostatic braking.

Software for controlling the BOP unit by generating the control signal is advantageously provided in the control unit 16.

The battery separation switches are interlocked with a High-Speed Circuit Breaker (HSCB) to prevent high voltage on the second power supply 10, e.g. a battery, and an additional safety layer is the at least one power flow preventing component 24, e.g. a diode. High Speed Circuit Breaker means a Circuit Breaker which has the ability to limit the fault current before it reaches its prospective value and before it reaches a level dangerous to the equipment it is protecting.

The inductor unit 22 of the BOP unit is provided to smooth out any voltage ripple from the chopper circuitry when functioning as a step-up chopper used to change the voltage of the predetermined second voltage level (typically 110V) to the predetermined first voltage level used to power the at least one traction motor 4 (typically 300V) from the DC link.

Still referring to figure 2, the BOP unit 18 comprises a first connection line 30 having a first end (to the left in the figure) connectable to a first connection point of the second power supply 10, and a second end (to the right in the figure) connectable to the brake resistor unit 14. One of the battery separation switches 20, the inductor unit 22, the power flow preventing unit 24 (e.g. a diode), and the brake chopper switch 21, are arranged in series along the first connection line 30 between the first and second ends. The BOP unit 18 also comprises a second connection line 32 having a first end (to the left in the figure), connectable to a second connection point of the second power supply 10, and a second end (to the right in the figure) being the chopper circuitry connection member 26 connectable to the chopper circuitry 12, and that the second connection line 32 is provided with the other of the battery separation switches 20.

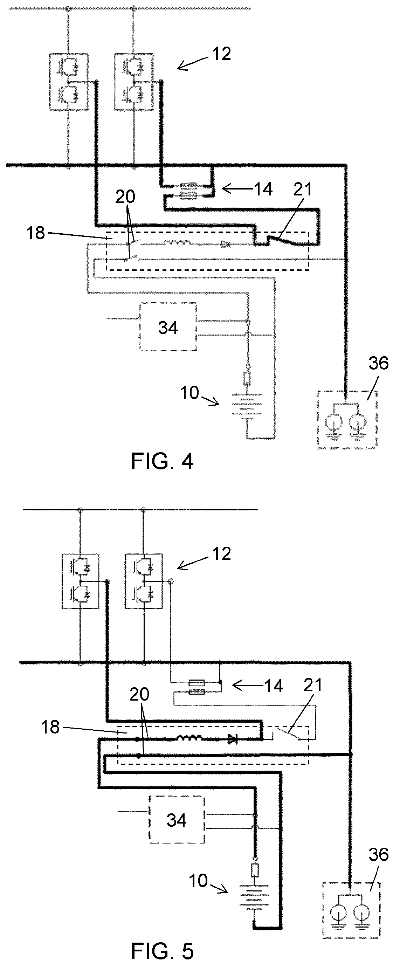

Figures 4 and 5 show simplified circuit diagrams illustrating the functionality of the traction system according to embodiments of the present invention.

Particularly, figure 4 shows the traction system when the chopper circuitry is controlled to function as a brake chopper. Thus, the control instructions comprise control instructions to open the battery separation switches 20, and to close said brake chopper switch 21. In the figure, bold lines clearly illustrate the current flow.

Particularly, figure 5 shows the traction system when the chopper circuitry is controlled to function as a step-up chopper. Thus, the control instructions comprise control instructions to close the battery separation switches 20, and to open said brake chopper switch 21. In the figure, bold lines clearly illustrate the current flow.

Dynamic braking is the use of an electric traction motor as a generator when slowing a vehicle. It is termed "rheostatic" if the generated electrical power is dissipated as heat in brake resistor unit, and "regenerative" if the power is returned to the supply line. Dynamic braking requires two components. A brake chopper and the external brake resistor unit. The brake chopper normally consists of an IGBT assembly and a logic function. The chopper controls the DC link voltage by connecting the brake resistor across the link when the voltage reaches a predetermined level, dissipating the excessive energy in the brake resistor unit.

The present invention is not limited to the above-described preferred embodiments. Various alternatives, and modifications may be used. Therefore, the above embodiments should not be taken as limiting the scope of the invention, which is defined by the appending claims.

## Claims

1. A traction system (2) for a vehicle, e.g. a train or a locomotive, comprising:
at least one AC traction motor (4) to propel said vehicle;
a DC link (6) configured to supply voltage having a predetermined first voltage level to said at least one AC traction motor (4);
a first power supply (8) configured to supply said DC link (6), e.g. from overhead contact lines, or from a third rail supply, with voltage at said predetermined first voltage level;
a second power supply (10) comprising at least one battery providing a predetermined second voltage level, being lower than the predetermined first voltage level;
a chopper circuitry (12) connected to the DC link (6);
a brake resistor unit (14) comprising at least one brake resistor, and
a control unit (16), **characterized in that** said traction system (2) comprises a battery-operation propulsion (BOP) unit (18) configured to connect the second power supply (10) to the DC link (6), wherein said BOP unit (18) comprises battery separation switches (20) structured to connect the chopper circuitry (12) either to the brake resistor unit (14), or to the second power supply (10), an inductor unit (22), at least one power flow preventing component (24), preferably at least one diode unit, configured to prevent power flow from said first power supply (8) directly to said second power supply (10), a brake chopper switch (21), and at least one chopper circuitry connection member (26), and that said control unit (16) is configured to control said BOP unit (18) by determining a control signal (28) provided with control instructions and by applying said control signal (28) to said BOP unit in order to control said chopper circuitry (12) to either:
a) function as a step-up chopper to adapt the predetermined second voltage level to the predetermined first voltage level such that the DC link (6) is supplied by the second power supply (10), or
b) function as a brake chopper for dynamic/rheostatic braking.

2. The traction system according to claim 1, wherein said BOP unit 18 comprises a first connection line (30) having a first end connectable to a first connection point of the second power supply (10), and a second end connectable to said brake resistor unit (14), wherein one of said battery separation switches (20), said inductor unit (22), said power flow preventing unit (24), and said brake chopper switch (21) are arranged in series along said first connection line (30) between the first and second ends, and a second connection line (32) having a first end, connectable to a second connection point of the second power supply (10), and a second end being said chopper circuitry connection member (26) connectable to said chopper circuitry, wherein said second connection line is provided with the other of said battery separation switches (20).

3. The traction system according to claim 1 or 2, wherein when said chopper circuitry is controlled to function as a step-up chopper, the control instructions comprise control instructions to close said battery separation switches (20), and to open said brake chopper switch (21).

4. The traction system according to any of claims 1-3, wherein when said chopper circuitry is controlled to function as a brake chopper, the control instructions comprise control instructions to open said battery separation switches (20), and to close said brake chopper switch (21).

5. The traction system according to any of claims 1-4, wherein when said chopper circuitry is controlled to function as a step-up chopper, said inductor unit is configured to smooth out voltage ripple of the output voltage from the chopper circuitry when changing the voltage from said second voltage level to said first voltage level.

6. The traction system according to any of claims 1-5, wherein said predetermined first voltage level is at least 250V, and typically 300V, and said predetermined second voltage level is below 250V, and typically 110V.
